# EUROPÄISCHE PATENTANMELDUNG

(11) **EP 0 609 554 A1**
(43) Veröffentlichungstag der Anmeldung: **10.08.1994**
(21) Anmeldenummer: 93120752.6
(22) Anmeldetag: 22.12.1993
(51) Int. Cl.: B60Q 5/00

(54) **Halteelement**

(30) Priorität: 01.02.1993 DE 4302760
(71) Anmelder: TRW United-Carr GmbH & Co. KG, D-67677 Enkenbach-Alsenborn (DE)
(72) Erfinder: Rückwardt, Hans-Werner, D-67307 Göllheim/Pfalz (DE)
(74) Vertreter: Schieschke, Klaus, Dipl.-Ing.

(57) **Zusammenfassung**

Die Erfindung bezieht sich auf ein Halteelement 1 zur Befestigung eines Teils an einem Träger, insbesondere mindestens eines Signalhorns an einer Kraftfahrzeugkarosserie, mit zwei Bereichen 2, 3, wobei der eine Bereich 2 mit dem Träger und der andere Bereich 3 mit dem Teil jeweils über mindestens ein Befestigungselement verbunden ist. Das Halteelement besteht hierbei aus Kunststoff, wobei die beiden Bereiche 2, 3 des Halteelements 1 miteinander verbunden sind und jeweils Verstärkungen 5, 6 aufweisen.

## Beschreibung

Die Erfindung bezieht sich auf ein Halteelement zur Befestigung eines Teils an einem Träger, insbesondere mindestens eines Signalhorns an einer Kraftfahrzeug-Karosserie, mit zwei Bereichen, wobei der eine Bereich mit dem Träger und der andere Bereich mit dem Teil jeweils über mindestens ein Befestigungselement verbunden ist.

Als allgemein bekannter Stand der Technik liegt bereits eine Konstruktion vor, bei welcher das Halteelement aus mehreren einzelnen Metallteilen besteht. Hierbei ist der eine Metallteil mehrfach abgewinkelt und an einem Ende über ein Befestigungselement mit dem Träger verbunden. Der äußere Schenkel des Winkels ist mit einem geradlinig verlaufenden zweiten Teil über ein weiteres Befestigungselement verbunden, an dessen äußeren Bereich das Signalhorn über ein drittes Befestigungselement gehalten wird.

Es ergibt sich damit eine konstruktiv aufwendige Konstruktion, da das Halteelement aus mehreren Teilen besteht, welche miteinander verbunden werden müssen, wobei außerdem infolge der Gestaltung dieses Halteelements aus Metall unerwünschte Schwingungen auftreten können, welche die Befestigung zwischen den Teilen des Halteelements nachteilig beeinflussen und geräuschbildend sind.

Der vorliegenden Erfindung liegt demgegenüber die Aufgabe zugrunde, ein Halteelement der eingangs genannten Art zu schaffen, welches einen einfacheren Aufbau aufweist, kostensparend ausgebildet ist und unerwünschte Schwingungen reduziert.

Diese Aufgabe wird erfindungsgemäß dadurch gelöst, daß das Halteelement einstückig aus Kunststoff ausgebildet ist und daß die beiden Bereiche des Halteelements miteinander verbunden sind und jeweils Verstärkungen aufweisen. Durch diese einteilige Gestaltung des Halteelements aus Kunststoff ergibt sich der Vorteil einer einfacheren, kostensparenden Herstellung, wobei die Verstärkungen die gesamte Einheit stabilisieren und außerdem unerwünschte Schwingungen weitgehend reduziert werden.

Das Halteelement ist aus Kunststoff ausgebildet, wobei vorteilhafterweise ein Glasfaseranteil zur zusätzlichen Verstärkung eingebracht werden kann.

In weiterer Ausgestaltung der Erfindung können die beiden Bereiche über einen winkelförmig ausgebildeten Mittelbereich mit zwei Schenkeln miteinander verbunden sein; der Mittelbereich kann hierbei einen U-förmigen Querschnitt besitzen. Darüber hinaus kann der winkelförmige Bereich mindestens eine Verstärkungsrippe zwischen den beiden Schenkeln aufweisen. Der eine Schenkel kann geradlinig in den anschließenden ersten Bereich übergehen, wohingegen der andere Schenkel winklig an den anschließenden anderen Bereich angrenzt. Jeder Bereich kann eine durchgehende Öffnung aufweisen, welche im Abstand von einer umlaufenden Verstärkungsrippe umgeben ist.

In weiterer Ausgestaltung der Erfindung kann darüber hinaus mindestens ein Bereich an der dem Träger und/oder dem Teil zugekehrten Fläche eine Begrenzungskante aufweisen, welche gleichzeitig eine Verdrehsicherung darstellt.

Durch den Einsatz von Kunststoff als Material für das erfindungsgemäße Halteelement ergeben sich vorteilhafterweise eine Verringerung der Einzelteile, eine Verringerung der Montagegänge, die Vermeidung von Korrosionsproblemen; bei der Befestigung von mindestens einem Signalhorn an einem Träger; z.B. der Kfz-Karosserie, darüber hinaus die Einhaltung akustischer Richtlinien der Hersteller und der entsprechenden DIN-Normen.

Die Erfindung wird nachfolgend anhand eines in der Zeichnung dargestellten Ausführungsbeispiels näher beschrieben. In der Zeichnung zeigen:
- Fig. 1: eine perspektivische Ansicht des erfindungsgemäßen Halteelements;
- Fig. 2: das erfindungsgemäße Halteelement in eingebautem Zustand in Seitenansicht.

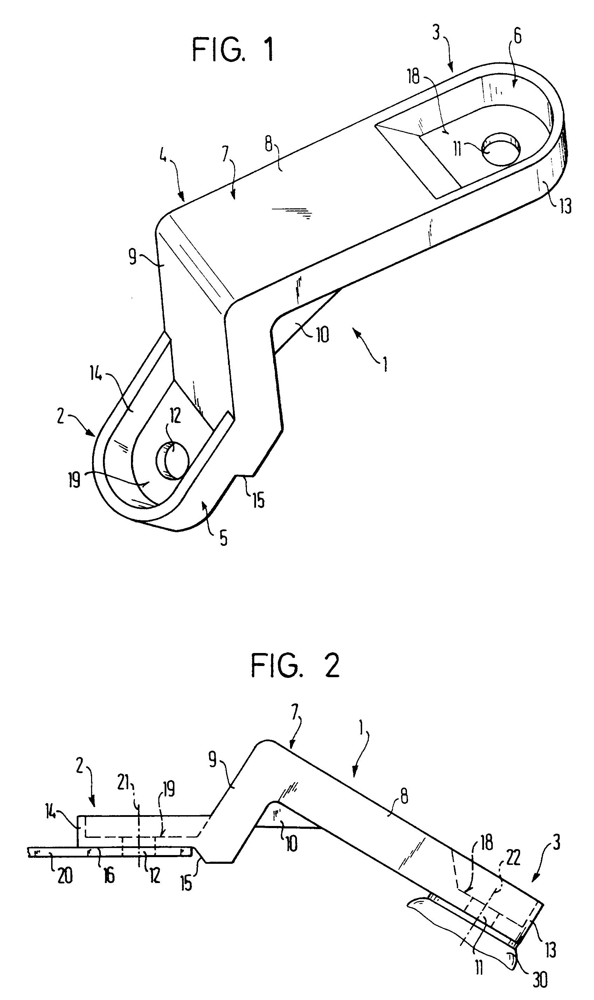

Gemäß Fig. 1 besteht das einstückig ausgebildete Halteelement 1 aus Kunststoff, vorzugsweise mit Glasfaserverstärkung. Dieses Halteelement 1 weist einen Bereich 2 sowie einen zweiten Bereich 3 auf. Diese beiden Bereiche 2 und 3 sind über eine Verstärkung 4 miteinander verbunden, wobei diese Verstärkung 4 als winkelförmiger Mittelbereich 7 gestaltet ist.

Der Mittelbereich 7 weist zwei Schenkel 8, 9 auf, welche in die beiden Bereiche 2 und 3 übergehen. Der Mittelbereich 7 kann so ausgebildet sein, daß er im Querschnitt U-form aufweist. Wie aus Fig. 1 weiter hervorgeht, ist zwischen den beiden Schenkeln 8 und 9 des winkelförmigen Mittelbereichs 7 mindestens eine Verstärkungsrippe 10 angeordnet.

Der eine Schenkel 8 geht darüber hinaus geradlinig in den anschließenden Bereich 3 über, wohingegen der andere Schenkel 9 winklig an den anschließenden anderen Bereich 2 angrenzt. Jeder Bereich 2 und 3 weist eine durchgehende Öffnung 11, 12 auf, die im Abstand von einer umlaufenden Verstärkungsrippe 13 und 14 umgeben ist. Die beiden Bereiche 2 und 3 besitzen damit eine Art Napfform, wobei die beiden Bodenflächen 18 und 19, in welchen die Öffnungen 11 und 12 eingearbeitet sind, von den Verstärkungen 13 und 14 begrenzt sind.

Wie aus Fig. 1 ersichtlich, weist z.B. der Bereich 2 an der einem Träger zugekehrten Fläche eine Begrenzungskante 15 auf, welche gleichzeitig eine Verdrehsicherung darstellt.

Fig. 2 zeigt den Einbau des Halteelements 1 an einem Träger 20. Hierbei wird über ein nicht näher dargestelltes Befestigungselement 21 das Halteelement 1 an dem Träger verschraubt. Ist dieses Befestigungselement 21 eine Schraube, so lagert sich vorteilhafterweise der Kopf dieser Schraube in dem schalenförmigen Bereich 2 des Halteelements 1 ein und kann durch die Verstärkungen 14 gegen ein Verdrehen gesichert werden.

Der andere Bereich 3 ist ähnlich wie der Bereich 2 gestaltet. Hier wird über ein nicht näher dargestelltes Befestigungselement 22 mindestens ein Signalhorn 30 befestigt. Ist dieses Befestigungselement 22 wiederum als Schraube ausgebildet, so lagert sich auch dieser Schraubenkopf in dem schalenförmigen Bereich 3 des Halteelements 1 ein und kann ebenfalls durch die Verstärkungen 13 gegen ein Verdrehen gesichert werden.

Durch die schalenförmige Gestaltung der Bereiche 2 und 3 sowie durch die Verstärkung über den Mittelbereich 7 mit der Rippe 10 ergibt sich ein Halteelement 1, welches eine sehr große Stabilität aufweist und unerwünschte Schwingungen weitgehend reduziert. Dieses Halteelement 1 ist kostensparend herstellbar. Es weist sowohl in akustischer als auch in mechanisch-dynamischer Hinsicht eine wesentliche Verbesserung gegenüber Halteelementen nach dem bekannten Stand der Technik auf.

Als Kunststoffmaterialien können z.B. PP, POM, PA, ABS, PETP, PBTP, PC, PPO, PSU, PES oder PPS verwendet werden. Die Verstärkungen können außer Glasfasern, Kohlefasern, Glaskugeln, Talkum, Mineralien oder Stahlfasern sein. Der Verstärkungsanteil kann in den Grenzen von 10 % bis 50 % liegen. Statt der Halterung mindestens eines Signalhorns können durch das erfindungsgemäße Halteelement 1 auch andere Teile z.B. akustische Warnsignalgeräte für Behördenfahrzeuge oder andere akustische Warngeräte an einer KFZ-Karosserie oder einem anderen Träger befestigt werden.

## Patentansprüche

1. Halteelement zur Befestigung eines Teils an einem Träger, insbesondere mindestens eines Signalhorns an einer Kraftfahrzeug-Karosserie mit zwei Bereichen, wobei der eine Bereich mit dem Träger und der andere Bereich mit dem Teil jeweils über mindestens ein Befestigungselement verbunden ist,
dadurch gekennzeichnet,
daß das Halteelement (1) einstückig aus Kunststoff ausgebildet ist und
daß die beiden Bereiche (2, 3) des Halteelements (1) miteinander verbunden sind und jeweils Verstärkungen (5, 6) aufweisen.

2. Halteelement nach Anspruch 1,
dadurch gekennzeichnet,
daß dieses aus Kunststoff mit Verstärkungsmaterial besteht.

3. Halteelement nach Anspruch 2,
dadurch gekennzeichnet,
daß der Anteil des Verstärkungsmaterials max. 50 % beträgt.

4. Halteelement nach Anspruch 1-3,
dadurch gekennzeichnet,
daß die beiden Bereiche (2, 3) über mindestens eine konstruktive Verstärkung (4) miteinander verbunden sind.

5. Halteelement nach Anspruch 4,
dadurch gekennzeichnet,
daß als Verstärkung (4) die beiden Bereiche (2, 3) über einen winkelförmig ausgebildeten Mittelbereich (7) mit zwei Schenkeln (8, 9) miteinander verbunden sind.

6. Halteelement nach Anspruch 5,
dadurch gekennzeichnet,
daß der Mittelbereich (7) im Querschnitt U-förmig ausgebildet ist.

7. Halteelement nach Anspruch 5 und 6,
dadurch gekennzeichnet,
daß der winkelförmige Mittelbereich (7) mindestens eine Verstärkungsrippe (10) zwischen den beiden Schenkeln (8, 9) aufweist.

8. Halteelement nach den Ansprüchen 5 bis 7,
dadurch gekennzeichnet,
daß der eine Schenkel (8) geradlinig in den anschließenden einen Bereich (3) und der andere Schenkel (9) winklig in den anschließenden anderen Bereich (2) übergeht.

9. Halteelement nach einem der vorhergehenden Ansprüche,
dadurch gekennzeichnet,
daß jeder Bereich (2, 3) eine durchgehende Öffnung (11, 12) aufweist, welche im Abstand von einer umlaufenden Verstärkungsrippe (13, 14) umgeben ist.

10. Halteelement nach einem der vorhergehenden Ansprüche,
dadurch gekennzeichnet,
daß mindestens ein Bereich (2, 3) an der dem Träger und/ oder dem Teil zugekehrten Fläche eine Begrenzungskante (15) aufweist.

11. Halteelement nach einem der vorhergehenden Ansprüche,
dadurch gekennzeichnet,
daß das Material des Halteelements (1) PP, POM, PA, ABS, PETP, PBTP, PC, PPO, PSU, PES oder PPS ist.

12. Halteelement nach einem der vorhergehenden Ansprüche,
dadurch gekennzeichnet,
daß das Verstärkungsmaterial aus Glasfasern, Kohlefasern, Glaskugeln, Talkum, Mineralien oder Stahlfasern besteht.
